# EUROPEAN PATENT APPLICATION

(11) **EP 0 645 854 A1**
(43) Date of publication of application: **29.03.1995**
(21) Application number: 94306693.6
(22) Date of filing: 13.09.1994
(51) Int. Cl.: H01R 39/39, H02K 13/10

(54) **Brush gear for a miniature electric motor**

(30) Priority: 24.09.1993 GB 9319740
(71) Applicant: JOHNSON ELECTRIC S.A., CH-2300 La Chaux-de-Fonds (CH)
(72) Inventor: Wang, Patrick Shui-Chung, 10/F Repulse Bay (HK)
(74) Representative: Higgins, Michael Roger

(57) **Abstract**

Brush gear 50 for a miniature electric motor has an elongate brush arm having one end 11 connected to a brush holder 20, and the other end 12 adapted for contact with a commutator. Vibration dampening means in the form of a tube 30 is shrunk onto the brush arm intermediate of its ends.

## Description

This invention relates to brush gear for a miniature electric motor and in particular to brush gear incorporating vibration dampening means.

It is known to provide brush gear for miniature motors with vibration dampening means to reduce brush bounce and thus reduce electrical noise created by the motor. Many types of materials have been tried including rubber, paper and grease. However, in time, the adhesive used to hold the dampener in place ages and may fail or the grease may migrate or fall from the brush arm with possible contamination of the commutator or other parts within the motor.

The present invention seeks to mitigate these disadvantages by providing the vibration dampening means in the form of a tube which is shrunk onto the brush arm. This provides good fixing of the tube to the brush arm which may be further enhanced by adhesive. The structure of the tube means that adhesive is not essential and thus adhesive failure will not result in the dampening means separating from the brush arm as in the prior art.

Accordingly, the present invention provides brush gear for a miniature electric motor comprising: an elongate brush arm having a proximal end and a distal end, the proximal end being connected to a brush holder and the distal end being adapted for sliding contact with a commutator; and vibration dampening means applied to the brush arm intermediate the proximal and distal ends, wherein the vibration dampening means comprises a tube shrunk onto the brush arm.

The brush arm may be of the finger brush type in which the distal end is divided into a number of fingers by slits extending into an intermediate portion and the dampening means is a single tube extending over the root of the fingers or a plurality of tubes fitted to respective fingers.

The fitting of individual tubes to the fingers allows for possible variations on the dampening applied to each of the fingers so that the natural resonance frequencies of the fingers can be deliberately mismatched to produce a quieter motor. However, the single tube is easier and quicker to apply and provides acceptable dampening when noise levels are not so critical. Suitable shaping of the end of the tube may provide a small degree of variation in finger dampening if desired.

The invention also extends to a miniature electric motor incorporating such brush gear.

Brush gear according to the invention will now be described, by way of example only, with reference to the accompanying drawings, in which:
Figure 1 is an exploded pictorial view of brush gear for a miniature motor according to the present invention;
Figure 2 illustrates a finger leaf brush made in accordance with the embodiment of Figure 1;
Figure 3 illustrates a finger leaf brush of an alternate embodiment.
Figure 4 illustrates a miniature electric motor incorporating brush gear according to the embodiment of Figure 2.

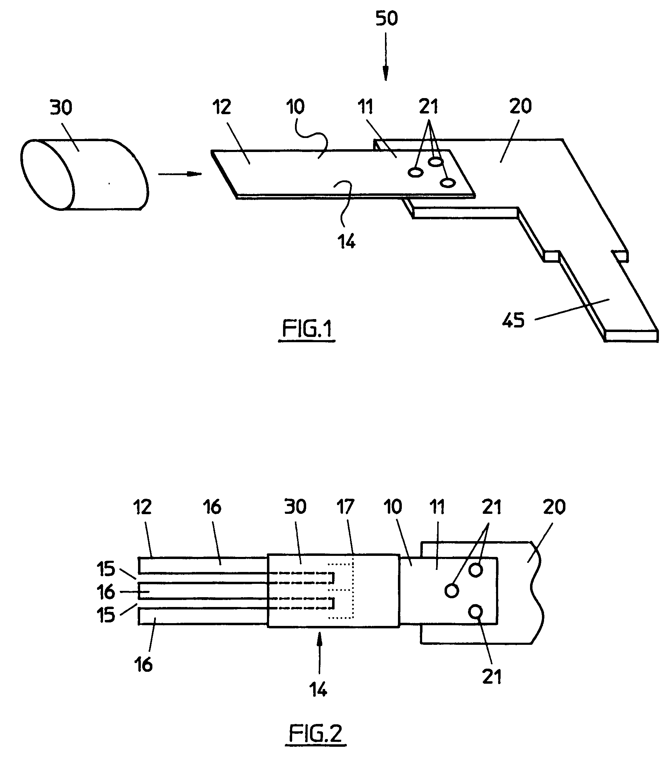

As shown in Figure 1, the first embodiment of the invention includes a brush arm 10 for a miniature electric motor. The brush arm is elongate in form with a proximal end 11 and a distal end 12. The proximal end is connected to a brush holder 20 by upset rivets 21 as is known. The distal end is adapted to make sliding contact with a commutator. This may be by way of a carbon brush or suitable shaping and/or coating of the distal end of the brush arm as is also commonly known.

Intermediate the ends of the brush arm is located vibration dampening means in the form of a tube 30 which is shrunk onto the brush arm. In Figure 1, the tube 30 is in its enlarged form before being fitted to the brush arm 10. The enlarged size of the tube allows the tube to be easily and quickly placed in position over an intermediate portion 14 of the brush arm and then shrunk to size using known techniques. A particularly convenient method is to use an elastomeric tubing which has been expanded and shrinks on application of heat to fit the tube to the brush arm. One such tubing is known as HEAT SHRINK tubing by Raychem Industries. This tubing is available with or without an inner coating of adhesive.

Figure 2 shows the tube so shrunk into position on a finger leaf brush. A finger leaf brush is a brush arm having a number of slits 15 dividing the distal end of the brush arm into a plurality of fingers 16 having their roots 17 in the intermediate portion 14. The tube is shown covering the roots of the fingers and extending a short distance either way. The exact extent of the tube will depend on dampening requirements.

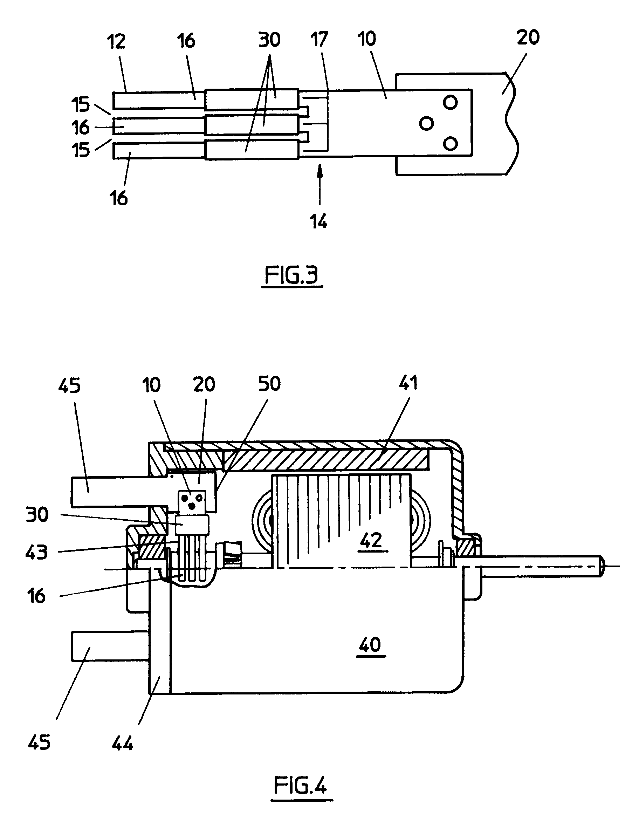

In Figure 3, an alternative embodiment is shown again using a finger brush. In this embodiment, the fingers 16 have separate tubes 30. This allows greater control over the degree of dampening provided for each finger individually and can be used to have fingers dampened for different resonance frequencies. The dampening rate depends on the length of the tube, the thickness of the tube and the material of the tube.

The present invention also encompasses a miniature motor incorporating brush gear as described and Figure 4 illustrates, in partial section, one such motor of the permanent magnet direct current type.

The motor has a can-like housing 40, two permanent magnets 41 forming a stator, a wound rotor 42 including a commutator 43 and an end cap 44 closing an open end of the casing. The end cap supports motor terminals 45 and the brush gear 50. The brush gear electrically connects the motor terminals to the commutator 43.

## Claims

1. Brush gear for a miniature electric motor, comprising:
an elongate brush arm (10) having a proximal end (11) and a distal end (12), the proximal end being connected to a brush holder (20) and the distal end being adapted for sliding contact with a commutator; and
vibration dampening means applied to the brush arm (10) intermediate the proximal and distal ends,
characterised in that, the vibration dampening means comprises a tube (30) shrunk onto the brush arm (10).

2. Brush gear as defined in claim 1, wherein the brush arm (10) has a number of longitudinally extending slits (15) dividing the distal end (12) into a plurality of fingers (16) with roots (17) in an intermediate portion (14) and further characterised in that the tube (30) extends over the intermediate portion (14) and covers at least the roots (17) of the fingers (16).

3. Brush gear as defined in claim 1, wherein the brush arm (10) is a finger leaf brush arm having a plurality of fingers (16) and further characterised in that the vibration dampening means comprises a plurality of tubes (30) fitted to respective fingers (16) by heat shrinking.

4. A miniature electric motor incorporating brush gear (50) according to any one of the preceding claims.
